# EUROPÄISCHE PATENTANMELDUNG

(11) **EP 1 322 024 A2**
(43) Veröffentlichungstag der Anmeldung: **25.06.2003**
(21) Anmeldenummer: 02025952.9
(22) Anmeldetag: 21.11.2002
(51) Int. Cl.: H02K 17/08

(54) **Selbsttätige Leistungsstufenanpassung**

(30) Priorität: 07.12.2001 DE 10160203
(71) Anmelder: WILO AG, 44263 Dortmund (DE)
(72) Erfinder: Wolff, Christian, 44149 Dortmund (DE); Albers, Frank, 58239 Schwerte (DE)
(74) Vertreter: COHAUSZ DAWIDOWICZ HANNIG & PARTNER

(57) **Zusammenfassung**

Verfahren zum Betrieb eines Elektromotors 1, insbesondere eines Asynchronmotors, mit einer Hauptwicklung 2 und mit einer Hilfswicklung 3, die, um unterschiedliche diskrete Leistungsstufen 10 zu erhalten, über Stromschalter ganz oder teilweise in Serie zur Hauptwicklung 2 geschaltet wird, wobei ein Stromschalter vermittels eines einen Steueranschluß (Gate) beaufschlagenden Gatestromes betätigt wird, wobei für jede Leistunsstufe ein Toleranzbereich 11, 12 für eine bestimmte Systemgröße definiert wird, wobei die Systemgröße gemessen wird und wobei die Leistungsstufe 10 durch eine Schalteinheit 9 automatisch geändert wird, wenn die Systemgröße aus dem Toleranzbereich 11, 12 herausfällt.

## Beschreibung

Die vorliegende Erfindung betrifft ein Verfahren zum Betrieb eines Elektromotors, insbesondere eines Asynchronmotors, mit einer Hauptwicklung und mit einer Hilfswicklung, die, um unterschiedliche diskrete Leistungsstufen zu erhalten, über Stromschalter ganz oder teilweise in Serie zur Hauptwicklung geschaltet wird, wobei ein Stromschalter vermittels eines einen Steueranschluß (Gate) beaufschlagenden Gatestromes betätigt wird. Die Erfindung betrifft gleichfalls eine Kreiselpumpe mit Elektromotor, der mit einem solchen Verfahren betrieben ist.

Motoren, die nach einem derartigen Verfahren angetrieben werden sind beispielsweise von Antrieben für Kreiselpumpen bekannt. Dabei handelt es sich im Wesentlichen um Pumpen relativ geringer Leistung von bis zu etwa 50 W, wie sie beispielsweise zum Betrieb von Heizkreisläufen benutzt werden. Die Pumpen sind in ihrer Leistung ungeregelt, können jedoch von Hand in mehreren, beispielsweise in drei, Leistungsstufen eingestellt werden. Eine einmal eingestellte Leistungsstufe wird durch eine Kurve im Kennlinienfeld repräsentiert, wobei sich die Pumpe im Betrieb auf dieser Kurve bewegt. Derartige ungeregelte Pumpen sind wegen des Verzichts auf eine aufwendige Regelelektronik besonders kostengünstig und zuverlässig.

Nachteilig an diesen Pumpen ist jedoch, daß sie möglicherweise schon bald den sich ändernden Anforderungen der Heizungsanlagenverordnung nicht mehr genügen. So müssen immer kleinere Anlagen mit sich selbsttätig regelnden Pumpen ausgestattet werden, um den Energieverbrauch weiter zu senken. Der Nutzer wird also gezwungen, eine erheblich teurere geregelte Pumpe einzubauen. Dabei würden die genannten dreistufig betreibbare Pumpen den Anforderungen eigentlich genügen.

Aufgabe der vorliegenden Erfindung ist es, ein Verfahren zu schaffen, das sich mit kostengünstigen Mitteln umsetzen läßt und das eine automatische Einstellung der Leistungsstufe eines Elektromotors, der insbesondere zum Antrieb einer Pumpe verwendet wird, unterstützt. Zudem ist es Aufgabe der Erfindung, eine zuverlässige Pumpe zu schaffen, mit der sich das Verfahren einfach umsetzen läßt.

Diese Aufgabe wird durch das Verfahren nach Anspruch 1 und durch die Pumpe nach Anspruch 11 gelöst.

Der Kern der Erfindung liegt zusammengefaßt darin, den mehrstufig betreibbaren ungeregelten Motor so zu betreiben, daß sich die einzelnen Leistungsstufen nach Bedarf und der Anforderung entsprechend selber einstellen. Die Umstellung, die vorher per Hand vorgenommen werden mußte, ist erfindungsgemäß automatisiert. Dabei kann bei dieser technisch relativ einfach zu realisierenden Umstellung kaum von einer Regelung im herkömmlichen Sinne, wie sie beispielsweise bei einer aufwendigen Drehzahlregelung vorhanden ist, gesprochen werden. So läßt sich die erfindungsgemäße "Selbsteinstellung" mit einfachsten analogen Bauteilen kostengünstig umsetzen. Auf eine komplizierte Regelung wird bewußt verzichtet. Mit der Erfindung lassen sich kleine Heizungspumpen betreiben, die preiswert und zuverlässig sind und den Anforderungen der Heizungsanlagenverordnung nach drei einstellbaren Leistungsstufen bei hohem Komfort für den Nutzer genügen.

Erfindungsgemäß wird eine Leistungsstufe in Abhängigkeit einer beobachteten Systemgröße eingestellt, wobei die Systemgröße eine Betriebsgröße der Pumpe oder eine Zustandsgröße, wie beispielsweise der Durchfluß, im zu bepumpenden System sein kann. In einem ersten Schritt wird zunächst eine solche Systemgröße bestimmt und dann für jede einstellbare Leistungsstufe ein Toleranzbereich festgelegt, der sich zwischen einem für die Systemgröße möglichen Maximum und einem Minimum erstreckt. Dieser Schritt der "Initialisierung" ist vorteilhafterweise ein Fertigungsschritt der schon in der Planungs- und Testphase des Motors vorgenommen wird. So wird ein Pumpentyp vom Hersteller im Labor vermessen und die Maxima und Minima finden als Umschaltpunkte Eingang in die Hardware. Die Umschaltpunkte werden sozusagen für ewig in die Hardware gegossen. Nach dieser Initialisierung, die also vor der ersten Inbetriebnahme des Motors geschieht, kann die Systemgröße im Betrieb gemessen respektive kontinuierlich beobachtet werden.

Sobald die Systemgröße sich aus dem jeweiligen Toleranzbereich herausbewegt, wird die Leistungsstufe durch eine Schalteinheit, die auf den mindestens einen Schalter wirkt, automatisch umgeschaltet. Das Umschalten erfolgt dabei in beiden Richtungen zu größeren und kleineren Leistungsstufen. Im Idealfall schaltet der Motor somit je nach Anforderung in einen anderen "Gang". Dabei ist es vorteilhaft, die Schalter mit TRIAC's zu realisieren, um das automatisierte Schalten möglichst zuverlässig vornehmen zu können.

Es ist vorteilhaft, wenn die Systemgröße eine Betriebsgröße des Elektromotors ist, die eine Abhängigkeit von der Leistungsaufnahme aufweist. Damit wird garantiert, daß der Motor unabhängig von Sensoren ist, die in das System integriert werden müssen. Als eine solche Betriebsgröße kann mit einfachen Mitteln beispielsweise die Stromaufnahme des Motors als Spannungsabfall über einem Meßwiderstand (Shunt) gemessen werden. Die Stromaufnahme steht dabei in Korrelation zur Anforderung des Systems an den Motor. Ebenso kann eine Phasenverschiebung zwischen dem Strom in einer Motorwicklung und dem Strom des Netzes gemessen werden. Aus dieser Meßgröße können ebenfalls Rückschlüsse auf die Belastung des Motors gezogen und ein Umschalten initiiert werden.

Besonders vorteilhaft ist, daß sich das erfindungsgemäße Verfahren nahezu vollständig ohne den Einsatz teurer und anfälliger digitaler Bauteile durchführen läßt. Die wenigen mitunter notwendigen digitalen Bauteile bilden auch lediglich einfache Schaltnetze und keine komplexen Schaltwerke. Das bedeutet, daß keine Zustände gespeichert werden. Es können daher auch keine logischen Fehler fortpflanzen und zu daeurhaften Fehlerzuständen führen.

Für die Messung der Stromstärke und für den Vergleich der Stromstärke mit dem festgelegten Toleranzbereich reichen Shunts und Leitungen aus, die beispielsweise zu Komparatoren mit festgelegter Schaltschwelle führen. Somit kann die Systemgröße in einer besonders einfachen Ausführungsform der Erfindung kontinuierlich durch ein analoges Bauteil, durch Abgriff gemessen werden. Zudem kann der Vergleich der abgegriffenen Systemgröße mit dem Toleranzbereich durch eine analoge Schaltung umfassend Operationsverstärker und Komparatoren bewerkstelligt werden. Auf den bei den bekannten Regelungen eingesetzten Mikroprozessor, der einer digitalen Datenaufbereitung bedarf, kann vollständig verzichtet werden. Erindungsgemäß ist die Herstellung entsprechender zuverlässiger Motoren besonders günstig. Mit der Erfindung ist es somit möglich, eine einfache, zuverlässige und kostengünstige Pumpe anzubieten, die trotz allem den Komfort einer teuren geregelten Pumpe bietet.

Besonders vorteilhaft läßt sich das erfindungsgemäße Verfahren umsetzen, wenn zur Initialisierung für jede Leistungsstufe der Kreiselpumpe eine Förderkennlinie, also die jeweilige Förderhöhe in Abhängigkeit vom Durchfluß, aufgenommen wird und diese Kennlinien als Kennlinienfeld registriert werden. Diese Art der Grund-Initialisierung braucht für einen Pumpentyp nur einmal geschehen, da sich alle Pumpen eines Typs in ihrem Verhalten gleichen. Auf jeder Förderkennlinie wird dann ein Toleranzbereich für eine mit dem Durchfluß korrespondierende Betriebsoder Systemgröße über ein Durchflußintervall definiert, wobei die Maxima und Minima beispielsweise in der Einstellung der Komparatoren registriert wird. Mit der durch den Hersteller initialisierten Elektronik wird die Systemgröße im Betrieb gemessen. Die Leistungsstufe wird dann automatisch so eingestellt, daß die Systemgröße in den vorher definierten "erlaubten" Toleranzbereich fällt. Fällt die Systemgröße aus dem Toleranzbereich heraus, wird die Leistungsstufe umgestellt.

Generell bedarf es bei Umsetzung des erfindungsgemäßen Verfahrens keiner weiteren Einstellung der Pumpe durch den Nutzer. Um jedoch die Pumpe den Gegebenheiten einer Heizungsanlage besser anpassen zu können, ist es vorteilhaft, eine Justierung der durch die Toleranzbereiche definierten und auf den Förderkennlinien liegenden Maxima und/oder Minima zu vorzusehen. Eine solche Möglichkeit besteht darin, die Steigung der Kurve(n), auf der (denen) diese Punkte liegen, über ein für den Nutzer zugängliches Bedienmittel einstellbar zu machen. Die Steigung einer solchen Verbindungskurve ist dann vorgebbar und kann positive oder negative Werte annehmen. Die Variation ändert sozusagen die Steilheit der Treppen, wie nachfolgend gezeigt werden wird. Mit diesem Verfahren betrieben kann die erfindungsgemäße Pumpe als Wegbereiter für den Kunden zu hochwertigeren Produkten dienen. Insbesondere eignet sich die Pumpe gut für zur Problemlösung an "besonders geräuschfreudigen" Anlagen.

Letztendlich wird die Pumpe bei korrekter Auslegung relativ selten einen Stufenwechsel durchführen und so besonders leise und mit niedrigen Störausstrahlungen arbeiten, zumal keinerlei Halbwellenmischungen oder Phasenanschnitte zur Leistungssteuerung benutzt werden. Durch Vorgabe der Steilheit der Kurve kann der Nutzer verhindern, daß die Pumpe im normalen Betriebsfall Leistungsstufen erreicht, die für die Anlage zu hoch sind und Geräusche erzeugen oder die für die Anlage zu niedrig sind, so daß Räume wegen einer Unterversorgung kalt bleiben.

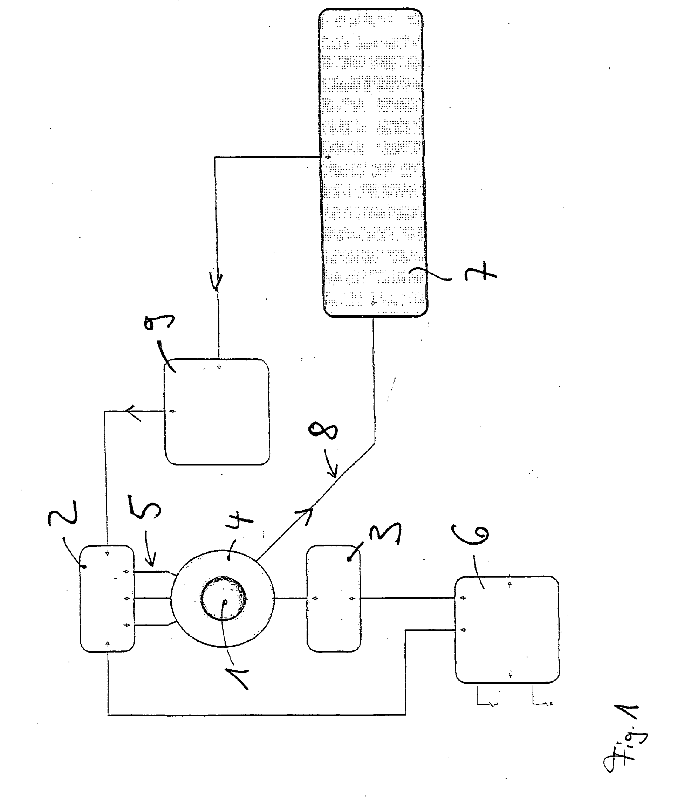

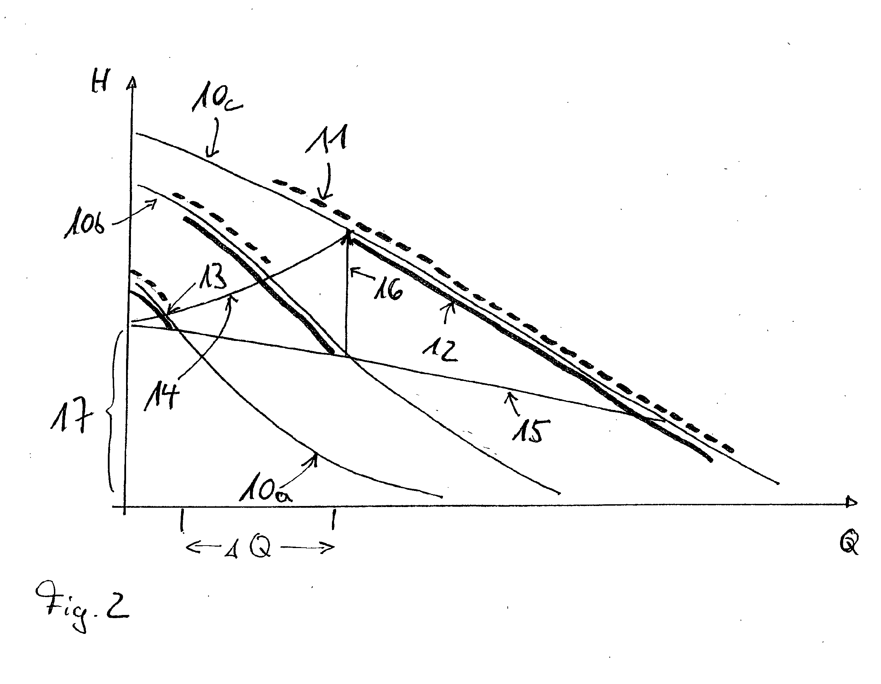

Eine besondere Ausführungsform der Erfindung ist anhand der Figuren 1 und 2 dargestellt und wird im folgenden näher beschrieben. Es zeigen:
- **Figur 1**: das Schaltschema eines Elektromotors und
- **Figur 2**: ein Kennlinienfeld.

In der Figur 1 ist die Schaltung eines Asynchronmotors 1 mit einer Hauptwicklung 2 und einer Hilfswicklung 3 schematisch gezeigt, wobei die Hilfswicklung in zwei Teile geteilt ist und einen Kondensator in Reihe geschaltet hat. In Reihe mit der Hauptwicklung ist eine Schalteinheit angeordnet, die vermittels dreier Leitungen 5 die Hilfswicklung komplett, zur Hälfte oder gar nicht in Reihe zur Hauptwicklung schalten kann. Die Schaltprozesse werden vermittels dreier Wechselstromschalter, z.B. vermittels TRIAC's durchgeführt. Die TRIAC's werden über einen den Steueranschluß (Gate) beaufschlagenden Gatestrom betätigt. So sind drei Leistungsstufen des Motors realisiert. Der Stator 4 der Haupt- 2 und Hilfswicklung 3 ist lediglich als Kreis schematisch dargestellt. Die Wicklungen werden über einen Klemmenkasten 6 mit der Netzspannung versorgt.

Der in seiner Leistung in diskreten Stufen einstellbare Motor 1 betreibt in diesem Fall eine Spalttopfpumpe. Zur Bestimmung der Systemgröße ist eine Steuerlogik 7 vorhanden, die über eine Leitung 8 den Strom in einer Wicklung abgreift und vermittels nicht dargestellter Komparatoren mit den vorgegebenen Werten der Toleranzbereiche vergleicht. Das Ausgangssignal der Steuerlogik 7 wird einem Schaltmodul 9 zugeführt, das die Schaltung der TRIAC's vornimmt. Steuerlogik 7 und Schaltmodul 9 bilden zusammen ein Steuermodul.

In Figur 2 ist das Kennlinienfeld einer mit einem solchen Motor angetriebenen Pumpe gezeigt, wobei der Durchfluß Q gegen die Förderhöhe H aufgetragen ist. Die drei gezeigten Kennlinien 10 repräsentieren jeweils eine Leistungsstufe der Pumpe. Zudem sind in das Kennlinienfeld Toleranzbereiche eingezeichnet, wobei es sich um Toleranzbereiche 11 mit hohem Einstellwert (unterbrochene Kurven) und um Toleranzbereiche 12 mit niedrigem Einstellwert (durchgehende Kurven) handelt. Innerhalb der Toleranzbereiche muß sich erfindungsgemäß die Systemgröße bewegen.

Als Systemgröße kann hier beispielsweise der Durchfluß direkt gemessen werden wobei ein kleiner Durchfluß mit einer niedrigen Leistungsstufe 10a bewerkstelligt wird. Vergrößert sich der Durchfluß wegen eines erhöhten Systembedarfs, so wird das Maximum 13 des Toleranzbereiches auf der sinkenden Kennlinie 10a erkannt und eine Stufe hoch zur mittleren Leistungsstufe 10b geschaltet. Bei weiterer Erhöhung wird die Leistungsstufe 10c erreicht. Dabei ist der Einstellwert vergleichsweise hoch, wie die Steigung der Verbindungskurve 14 der Maxima zeigt. Die Steigung dieser Kurve ist vom Nutzer eingestellt. Dabei bedeutet ein hoher Einstellwert, daß der Wechsel zu höheren Leistungsstufen relativ schnell stattfindet. Neben der Steigung der Kurve läßt sich vom Nutzer noch ein Offset 17 vorgeben.

Im Fall des niedrigen Einstellwertes (flache Kurve 15) bleibt die mittlere Leistung 10b über einen größeren Toleranzbereich erhalten, bevor die Schaltung auf die höchste Leistungsstufe 10c umschaltet. Dieser Umschaltvorgang 16 ist im Schaubild repräsentativ für die anderen Umschaltvorgänge gezeigt.

## Patentansprüche

1. Verfahren zum Betrieb eines Elektromotors (1), insbesondere eines Asynchronmotors, mit einer Hauptwicklung (2) und mit einer Hilfswicklung (3), die, um unterschiedliche diskrete Leistungsstufen (10) zu erhalten, über Stromschalter ganz oder teilweise in Serie zur Hauptwicklung (2) geschaltet wird, wobei ein Stromschalter vermittels eines einen Steueranschluß (Gate) beaufschlagenden Gatestromes betätigt wird,
**dadurch gekennzeichnet,**
- **daß** für jede Leistunsstufe ein Toleranzbereich (11,12) für eine bestimmte Systemgröße definiert wird,
- **daß** die Systemgröße gemessen wird und
- **daß** die Leistungsstufe (10) durch eine Schalteinheit (9) automatisch geändert wird, wenn die Systemgröße aus dem Toleranzbereich (11,12) herausfällt.

2. Verfahren nach Anspruch 1,
**dadurch gekennzeichnet, daß** die Systemgröße eine Betriebsgröße des Elektromotors (1) ist, die eine Abhängigkeit von der Leistungsaufnahme aufweist.

3. Verfahren nach Anspruch 1 oder 2,
**dadurch gekennzeichnet, daß** als Systemgröße die Stromaufnahme oder eine Phasenverschiebung zwischen dem Strom in einer Motorwicklung und dem Strom des Netzes gemessen wird.

4. Elektromotor nach einem der vorherigen Ansprüche,
**dadurch gekennzeichnet, daß** die Stromschalter von TRIAC's gebildet werden.

5. Elektromotor nach einem der vorherigen Ansprüche,
**dadurch gekennzeichnet, daß** die Systemgröße kontinuierlich mittels eines analogen Bauteiles durch Abgriff gemessen wird.

6. Elektromotor nach einem der vorherigen Ansprüche,
**dadurch gekennzeichnet, daß** der Vergleich der abgegriffenen Systemgröße mit dem Toleranzbereich (11,12) durch ein analoges Bauteil vorgenommen wird.

7. Verfahren nach einem der vorherigen Ansprüche,
**dadurch gekennzeichnet, daß** mit dem Elektromotor (1) eine Kreiselpumpe, insbesondere eine Spaltrohrpumpe, betrieben wird.

8. Verfahren nach Anspruch 7,
**dadurch gekennzeichnet, daß** für jede Leistungsstufe der Kreiselpumpe die Förderkennlinie(10) als Förderhöhe in Abhängigkeit vom Durchfluß, aufgenommen wird, daß auf jeder Förderkennlinie (10) ein Toleranzbereich (11,12) überein Durchflußintervall (Q) definiert wird, daß eine mit dem Durchfluß Q korrespondierende Systemgröße gemessen und daß die Leistungsstufe so eingestellt wird, daß die Systemgröße in einen definierten Toleranzbereich (11,12) fällt.

9. Verfahren nach Anspruch 7 oder 8,
**dadurch gekennzeichnet, daß** auf den Förderkennlinien (10) Punkte von maximalem Durchfluß (Maxima) festgelegt werden, die Toleranzbereiche einseitig begrenzen, wobei die Maxima auf einer Kurve bestimmter Steigung liegen.

10. Verfahren nach Anspruch 9,
**dadurch gekennzeichnet, daß** bei der Kurve die Steigung und/oder ein Offset (17) vorgebbar ist.

11. Kreiselpumpe, insbesondere Spalttopfpumpe, angetrieben von einem in seiner Leistung in diskreten Stufen einstellbaren Asynchronmotor (1) mit einer Hauptwicklung (2) und mit einer Hilfswicklung (3), die über mindestens einen Stromschalter ganz oder teilweise in Serie zur Hauptwicklung (2) schaltbar ist, wobei ein Stromschalter vermittels eines einen Steueranschluß (Gate) beaufschlagenden Gatestromes betätigt wird und wobei jede Leistungsstufe durch eine Förderkennlinie (10) charakterisiert ist, **gekennzeichnet durch**
ein Steuermodul, das als Eingangsgröße eine Systemgröße empfängt und das mit einer Ausgangsgröße den Schalter schaltet.
